# EUROPÄISCHE PATENTSCHRIFT

(11) **EP 1 948 489 B1**
(45) Veröffentlichungstag und Bekanntmachung des Hinweises auf die Patenterteilung: **24.11.2010**
(21) Anmeldenummer: 06805860.1
(22) Anmeldetag: 26.09.2006
(51) Int. Cl.: B60S 1/38

(54) **WISCHGUMMI FÜR DAS WISCHERBLATT EINES SCHEIBENWISCHERS**
WIPER RUBBER FOR THE WIPER BLADE OF A WINDSCREEN WIPER
CAOUTCHOUC POUR LAME D'ESSUIE-GLACE D'UN BALAI D'ESSUIE-GLACE

(30) Priorität: 11.11.2005 DE 102005053811
(43) Veröffentlichungstag der Anmeldung: 30.07.2008
(73) Patentinhaber: Volkswagen Aktiengesellschaft, 38436 Wolfsburg (DE)
(72) Erfinder: FANGMEIER, Wilhelm, 38442 Wolfsburg (DE)
(86) Internationale Anmeldenummer: PCT/EP2006/009315
(87) Internationale Veröffentlichungsnummer: WO 2007/054158

(56) Entgegenhaltungen:
- DE-A1- 10 257 553
- DE-U1- 9 104 461

## Beschreibung

Die Erfindung betrifft einen Wischgummi für das Wischerblatt eines Scheibenwischers zum Reinigen der Front- oder Heckscheibe (Scheibe) eines Fahrzeugs, insbesondere einen Wischgummi für ein haltebügelloses Wischerblatt.

Haltebügellose Wischerblätter bestehen im wesentlichen aus einer aus einem gummielastischen Material gefertigten langgestreckten Wischleiste, die üblicherweise ein mit seitlichen Längsnuten versehenes Oberteil und ein mit diesem über zumindest einen Kippsteg verbundenes Unterteil mit einer Wischlippe aufweist, und einem mit dieser verbundenen und gegenüber der Scheibe konkav gekrümmten, federelastischen Tragelement. Dieses ist insbesondere aus zwei parallelen Federschienen gebildet, die in den im Oberteil ausgebildeten Längsnuten angeordnet sind. Am Oberteil oder dem Tragelement ist ein Windleitprofil ausgebildet oder angeordnet, das bewirkt, dass das Wischerblatt im durch den Wischerarm belasteten und somit an die Scheibe gedrückten Zustand während des Wischvorganges mit einer erhöhten Anpresskraft gegen die Scheibe gedrückt wird. Das Tragelement und die Wischleiste sind über an deren Enden befestigte Abschlußkappen miteinander verbunden und weisen in der Mitte eine Anschlußvorrichtung zur Anordnung an einem Wischerarm eines Scheibenwischers auf. Derartige Wischerblätter sind sog. Flachbau-Wischerblätter mit ästhetischen und fertigungstechnischen Vorteilen. Insbesondere sind diese Wischerblätter weniger aufwändig als herkömmliche Wischerblätter mit einem Haltebügelsystem zur Übertragung der vom Wischerarm ausgeübten Anpreßkraft auf die Wischlippe.

Beim Betreiben des Scheibenwischers wird die Wischlippe um den zumindest einen Kippsteg nach der jeweiligen Rückseite des über die Fahrzeugscheibe hin- und herstreichenden Wischerblattes gekippt und am Bewegungs-Umkehrpunkt des Scheibenwischers nach der jeweils anderen, nun die Rückseite bildenden Seite umgelegt. Dieses Umlegen oder auch Umschhappen der Wischlippe ist mit einer störenden Geräuschentwicklung verbunden, die insbesondere durch ein Aufschlagen der jeweiligen Längskante des Unterteils auf die über dieser ausgebildeten Fläche im Bereich des Kippsteges hervorgerufen wird und einen hohen Geräuschpegel im Fahrzeug erzeugt.

Zur Dämpfung dieser Geräuschentwicklung ist aus der DE 9104461 U1 eine Wischleiste bekannt, bei der zwischen dem Oberteil und dem Unterteil jeweils eine Dämpfungsleiste vorgesehen ist, die verhindert, dass die Längskante des Unterteils auf die die dieser zugewandten Fläche des Oberteils aufschlägt. Zwischen der in einem spitzen Winkel am Oberteil angeordneten Dämpfungsleiste und dem Oberteil wird jeweils ein im Querschnitt gesehen in etwa dreieckförmiger Deformationsraum gebildet, der zur Seite geöffnet ist. Die Dämpfungsleiste bewirkt, dass die Längskante des Unterteils beim Umlegen oder auch Umschnappen der Wischlippe zunächst gegen die Dämpfungsleiste schlägt, die elastisch nachgibt und in Richtung der Fläche des Oberteils energieverzehrend gebogen und bis zur Anlage "auf Block" an diese gedämpft geschlagen wird. Der Aufschlag der Längskante des Unterteils auf die jeweilige Dämpfungsleiste wird durch die elastische Dämpfungsleiste weicher und das entstehende Aufschlaggeräusch wird verringert. Allerdings schlägt die jeweilige Dämpfungsleiste auf die Fläche des Oberteils auf und verursacht ihrerseits ein Aufschlaggeräusch. Bei Wischblättem mit federelastischen Tragelementen ist die insgesamt erzielte Geräuschdämpfung unzureichend, insbesondere bei sehr langen Wischerblättern.

Auch aus der DE 102 57 553 A1 ist ein Wischgummi gemäß dem Oberbegriff nach Anspruch 1 bekannt.

Es ist Aufgabe der Erfindung, einen Wischgummi für das Wischerblatt eines Scheibenwischers nach dem Oberbegriff des Anspruchs 1 so zu gestalten, dass die beim Umlegen des Wischerblattes am jeweiligen Bewegungs-Umkehrpunkt des Wischerblattes erzeugten Umlegegeräusche weitestgehend beseitigt sind.

Diese Aufgabe wird bei einem Wischgummi nach dem Oberbegriff des Anspruchs 1 durch dessen kennzeichnenden Merkmale glöst. Vorteilhafte Ausgestaltungen sind in den Unteransprüchen aufgeführt.

Die Erfindung besteht darin, dass bei einem Wischgummi, der aus einem Oberteil und einem Unterteil mit einer Wischlippe gebildet ist, die durch einen Kippsteg miteinander verbunden sind, und bei dem zwischen den oberteilseitigen Längskanten des Unterteils und dem Oberteil Dämpfungsleisten angeordnet sind, die im spitzen Winkel zum Oberteil verlaufen und an diesem angeformt sind und einen Deformationsraum zu diesem für die Dämpfungsleisten ausbilden, dieser Deformationsraum in Richtung auf das Oberteil zu erheblich ausgedehnt ist.

Die Dämpfungsleisten bewirken zunächst in bekannter Weise, dass beim Umkehren der Bewegungsrichtung, verbunden mit einem Umlegen des Unterteils der Wischleiste, diese Kippbewegung nicht schlagartig, sondern gedämpft erfolgt. Die Oberkante des Unterteils schlägt dabei nicht gegen die Unterfläche des Oberteils, sondern gegen die Dämpfungsleiste, die deformiert wird. Die Erweiterung des Deformationsraumes führt nun dazu, dass die jeweilige Dämpfungsleiste sehr viel stärker deformierbar ist, als bei der Lösung nach dem Stand der Technik, und demzufolge mehr Aufprallenergie aufnehmen kann, so dass der Aufschlag der Längskante des Unterteils auf die Dämpfungsleiste weit mehr gedämpft wird als bei der Lösung nach dem Stand der Technik. Die Flexibilität des Unterteils wird dabei nicht verringert, ebenso nicht dessen Fähigkeit, die von einem Wischerarm eingebrachte Anpresskraft auf die Wischlippe zu übertragen.

Das Oberteil ist zur Schaffung des ausgedehnten Deformationsraumes auf der der jeweiligen Dämpfungsleiste zugewandten Seite im Querschnitt konkav ausgebildet und kann dabei vorteilhaft im Abstand vom Kippsteg einen längserstreckten Anschlag für die Dämpfungsleiste aufweisen. Gegen diesen Anschlag wird diese durch die Längskante des Unterteils, bereits gedämpft, gedrückt, um danach in den zwischen dem Anschlag und dem kippstegseitigen Ansatz der Dämpfungsleiste im Oberteil ausgebildeten Deformationsraum weiter energieverzehrend hinein deformiert zu werden, so dass das Aufschlaggeräusch weitestgehend beseitigt ist.

Alternativ dazu kann die jeweilige Dämpfungsleiste im Querschnitt verkürzt ausgebildet sein, so dass diese durch die Längskante des Unterteils in die konkave Vertiefung des Oberteils energieverzehrend hinein gedrückt wird. Der Deformationsweg kann dabei so bestimmt sein, dass die Dämpfungsleisten überhaupt nicht am Oberteil anschlagen.

Die Erfindung wird im folgenden anhand von Ausführungsbeispielen erläutert. In den zugehörigen Zeichnungen zeigen im Querschnitt:
Fig. 1a: einen Wischgummi in einer ersten Ausführung in der Nichtbetriebsstellung,
Fig. 1b: den Wischgummi in einer Betriebsstellung,
Fig. 2a: einen Wischgummi in einer zweiten Ausführung in der Nichtbetriebsstellung,
Fig. 2b: den Wischgummi in einer Betriebsstellung,
Fig. 3: eine dritte Ausführung eines Wischgummis in der Nichtbetriebsstellung und
Fig. 4: eine vierte Ausführung eines Wischgummis in der Nichtbetriebsstellung.

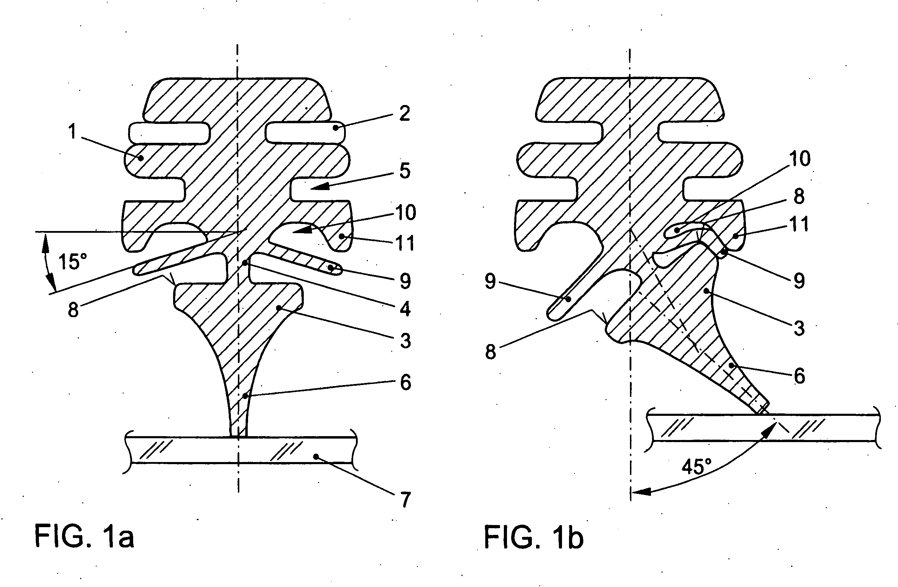

Der in den Fig. 1a und 1b gezeigte Wischgummi weist ein Oberteil 1 mit eingelegten Federschienen 2 als federelastisches Tragelement und ein Unterteil 3 auf, das über einen Kippsteg 4 mit dem Oberteil 1 verbunden ist. Im Oberteil 1 angeordnete Längsnuten 5 dienen dem Eingriff von Befestigungselementen eines Windleitprofils. Das Unterteil 3 ist mit einer Wischlippe 6 zur Anlage an einer Fahrzeugscheibe 7 versehen. Zwischen den oberteilseitigen Längskanten 8 des Unterteils 3 und dem Oberteil 1 sind am Übergang des Kippsteges 4 zum Oberteil 1 (also quasi am Oberteil) beidseits Dämpfungsleisten 9 im spitzen Winkel von 15° zum Oberteil 1 angeformt. Die Dämpfungsleisten 9 bilden mit dem Oberteil 1 einen zur Seite geöffneten Deformationsraum aus. Das Oberteil 1 ist jedoch auf der der jeweiligen Dämpfungsleiste 9 zugewandten Seite konkav ausgebildet und weist zur Bildung der konkaven Vertiefung 10 außenseitig jeweils eine nach dem Unterteil 3 zu gerichtete Längswulst 11 auf. Hierdurch wird der Deformationsraum erheblich in Richtung des Oberteils ausgedehnt.

Während des Betriebes des das Wischerblatt mit dem Wischgummi tragenden Scheibenwischers (nicht dargestellt) ist der Wischgummi nach der der Bewegungsrichtung abgewandten Seite zu geneigt, was in Fig. 1b gezeigt ist. Diese Neigung beträgt im Bereich der Wischlippe 6 etwa 45° und ist im Wesentlichen durch den Kippsteg 4 ermöglicht. Bei einer Bewegungsumkehr des Scheibenwischers schlägt das Unterteil 3 nach der entgegengesetzten Richtung um und schlägt mit der jeweiligen Längskante 8 an die jeweilige Dämpfungsleiste 9, die dabei in Richtung der Vertiefung 10 deformiert wird und dadurch den Aufschlag der Längskante 8 energieverzehrend dämpft. Die Längswulst 11 dient bei der Deformation zunächst als Anschlag. Die jeweilige Dämpfungsleiste 9 wird jedoch nach ihrem Anschlagen an diese weiter deformiert und durch die Längskante 8 in die konkave Vertiefung 10, die einen zusätzlichen Deformationsraum darstellt, hineingedrückt. Durch diese Dämpfung, hervorgerufen durch die energieverzehrende weitgehende Deformation wird das Auftreten eines Schlaggeräusches weitestgehend verhindert.

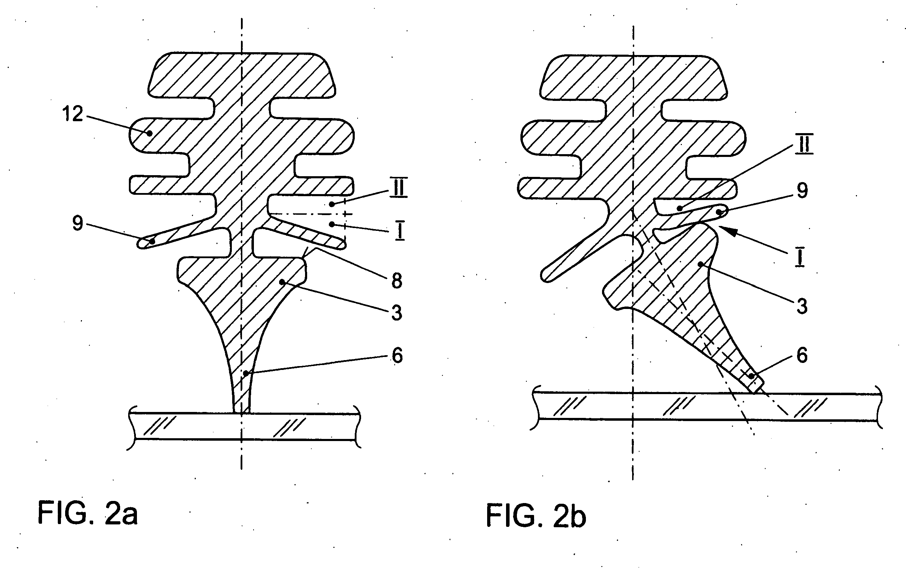

In den Fig. 2a und 2b ist ein Wischgummi gezeigt, bei dem im Unterschied zu dem vorstehend beschriebenen das Oberteil 12 auf der den Dämpfungsleisten 9 zugewandten Seite ebenflächig ausgebildet ist. Zudem sind die Dämpfungsleisten 9 zur Schaffung eines nach dem Oberteil 12 zu ausgedehnten Deformationsraumes im Abstand vom Oberteil 12 angeordnet. Strichpunktiert ist die Zusammensetzung des ausgedehnten Deformationsraumes aus einem in etwa dreieckförmigen Deformationsraum I und einem rechteckförmigen Deformationsraum II angedeutet. Bei einer Deformation der jeweiligen Dämpfungsleiste 9 durch die Längskante 8 des Unterteils 3 wird die Dämpfungsleiste erheblich deformiert und dabei in den zusätzlichen Deformationsraum II hineingedrückt, was in Fig. 2b dargestellt ist, wodurch die gleiche Wirkung wie bei der vorstehend beschriebenen Ausführung zu verzeichnen ist.

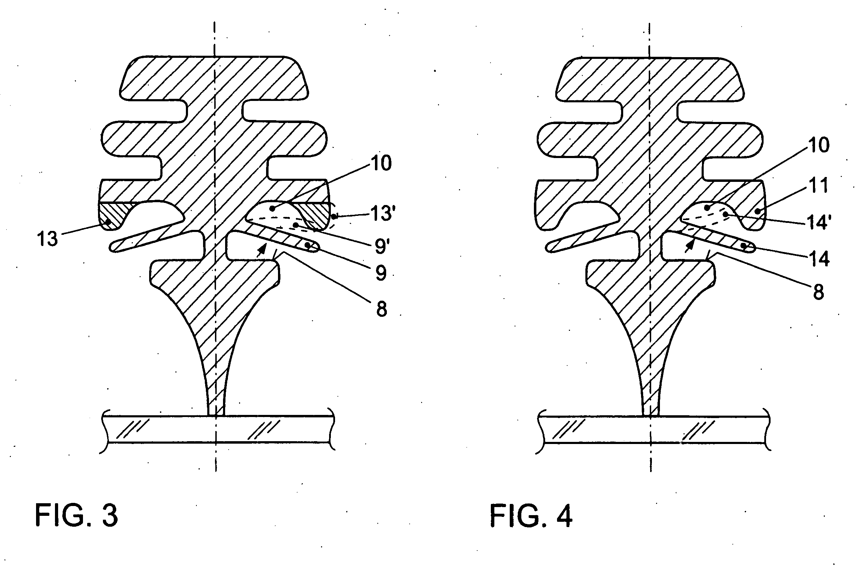

Weitere Ausführungen eines Wischgummis sind in den Fig. 3 und 4 gezeigt. Bei der Ausführung nach Fig. 3 sind die Längswülste 13 aus EPDM mit einer Härte Shore-A von 30 anextrudiert. Das Material des Wischgummi hat eine Härte Shore-A von 60. Bei einer Beaufschlagung der jeweiligen Dämpfungsleiste 9 wird diese deformiert und gegen die jeweilige Längswulst 13 gedrückt, die auf Grund ihrer geringen Härte elastisch nachgibt und eine weitere Deformation in die Vertiefung 10 hinein ermöglicht. Die beim Umschlagen des Unterteils 3 mit der Wischlippe 6 erfolgende Deformation und die dabei erreichten Deformationspositionen der Dämpfungsleiste (9') und der Längswulst (13'), die während des Betriebes erhalten bleiben, sind in gestrichelten Linien angedeutet. Bei der Ausführung nach Fig. 4, die sonst der Ausführung nach Fig. 1 entspricht, sind die Dämpfungsleisten 14 im Querschnitt kürzer ausgebildet, jedoch so lang, dass die Längskanten 8 des Unterteils 3 noch an diese anschlagen können. Ein Anschlagen der Dämpfungsleisten 14 an die Längswülste 11 erfolgt nicht, so dass erstere vollständig in die Vertiefung hineingedrückt werden (14').

### Bezugszeichenliste

- 1: Oberteil
- 2: Federschiene
- 3: Unterteil
- 4: Kippsteg
- 5: Längsnut
- 6: Wischlippe
- 7: Fahrzeugscheibe
- 8: Längskante
- 9: Dämpfungsleiste
- 10: Vertiefung
- 11: Längswulst
- 12: Oberteil
- 13: Längswulst
- 14: Dämpfungsleiste
- I: Deformationsraum
- II: Deformationsraum

## Patentansprüche

1. Wischgummi für das Wischerblatt eines Scheibenwischers, mit einem Oberteil zur Verbindung mit einem elastischen Tragelement und einem mit dem Oberteil über zumindest einen Kippsteg verbundenen Unterteil mit einer Wischlippe zur Anlage an einer Fahrzeugscheibe sowie mit Dämpfungsleisten zwischen den oberteilseitigen Längskanten des Unterteils und dem Oberteil, wobei die Dämpfungsleisten im spitzen Winkel am Oberteil angeordnet sind und einen Deformationsraum zu diesem ausbilden, **dadurch gekennzeichnet, dass** der Deformationsraum für die jeweilige Dämpfungsleiste (9, 14) in Richtung des Oberteils (1, 12) ausgedehnt ist, wobei das Oberteil (1) zur Schaffung des ausgedehnten Deformationsraumes (10) im Querschnitt auf der der Dämpfungsleiste (9) zugewandten Seite konkav ausgebildet ist.

2. Wischgummi nach Anspruch 1, **dadurch gekennzeichnet, dass** das Oberteil (1) im Abstand vom Kippsteg (4) einen längserstreckten Anschlag für die Dämpfungsleiste (9) aufweist und diese bei Anlage am Anschlag durch die jeweilige Längskante (8) des Unterteils (3) in den Deformationsraum (10) hineingedrückt ist.

3. Wischgummi nach Anspruch 2, **dadurch gekennzeichnet, dass** der Anschlag durch jeweils eine nach dem Unterteil (3) zu gerichtete Längswulst (11, 13) gebildet ist, die die jeweilige konkave Vertiefung als Deformationsraum (10) ausbildet.

4. Wischgummi nach Anspruch 1, **dadurch gekennzeichnet, dass** die Dämpfungsleiste (9, 14) mit dem Oberteil (1) einen Winkel von 15 bis 25° einschließt.

5. Wischgummi nach Anspruch 3, **dadurch gekennzeichnet, dass** die Längswulst (13) aus einem Material mit einer wesentlich geringeren Shore-Härte als das Material des Wischgummis gebildet ist, insbesondere aus einem Material mit einer um die Hälfte geringeren Härte Shore A gegenüber dem Material der Wischgummis.

6. Wischgummi nach Anspruch 3, **dadurch gekennzeichnet, dass** das Material der Längswulst weiches EPDM ist, das beim Extrudieren des Wischgummis coextrudiert wird.

## Claims

1. Wiper rubber for the wiper blade of a windscreen wiper, with an upper part for connection to an elastic supporting element, and with a lower part which is connected to the upper part via at least one tilting web and has a wiper lip for bearing against a vehicle window, and with damping strips between those longitudinal edges of the lower part which are on the upper-part side and the upper part, wherein the damping strips are arranged at an acute angle to the upper part and form a deformation space with respect to the latter, **characterized in that** the deformation space for the respective damping strip (9, 14) is expanded in the direction of the upper part (1, 12), the upper part (1) being of concave design in cross section on the side facing the damping strip (9) in order to produce the expanded deformation space (10).

2. Wiper rubber according to Claim 1, **characterized in that** the upper part (1) has an elongate stop for the damping strip (9) at a distance from the tilting web (4) and said damping strip, upon contact with the stop, is pressed into the deformation space (10) by the respective longitudinal edge (8) of the lower part (3).

3. Wiper rubber according to Claim 2, **characterized in that** the stop is formed by a respective longitudinal bead (11, 13) which is directed towards the lower part (3) and forms the respective concave depression as a deformation space (10).

4. Wiper rubber according to Claim 1, **characterized in that** the damping strip (9, 14) encloses an angle of 15 to 25° with the upper part (1).

5. Wiper rubber according to Claim 3, **characterized in that** the longitudinal bead (13) is formed from a material with a substantially lower Shore hardness than the material of the wiper rubber, in particular from a material with a Shore A hardness which is lower by half than the material of the wiper rubber.

6. Wiper rubber according to Claim 3, **characterized in that** the material of the longitudinal bead is soft EPDM which is co-extruded when the wiper rubber is extruded.

## Revendications

1. Caoutchouc pour lame d'essuie-glace d'un balai essuie-glace, comprenant une partie supérieure destinée à être assemblée à un élément de support élastique et une partie inférieure connectée à la partie supérieure par le biais d'au moins une nervure basculante, avec une lèvre d'essuie-glace destinée à s'appliquer contre un pare-brise du véhicule et avec des languettes d'amortissement entre les arêtes longitudinales de la partie inférieure, du côté de la partie supérieure, et la partie supérieure, les languettes d'amortissement étant disposées à angle aigu sur la partie supérieure et formant avec celle-ci un espace de déformation, **caractérisé en ce que** l'espace de déformation pour chaque languette d'amortissement (9, 14) est étiré dans la direction de la partie supérieure (1, 12), la partie supérieure (1) étant réalisée sous forme concave en section transversale du côté tourné vers la languette d'amortissement (9) pour créer l'espace de déformation étiré (10).

2. Caoutchouc selon la revendication 1, **caractérisé en ce que** la partie supérieure (1) présente, à distance de la nervure basculante (4), une butée allongée pour la languette d'amortissement (9), et cette dernière est pressée, lors de son application contre la butée, dans l'espace de déformation (10) par l'arête longitudinale respective (8) de la partie inférieure (3).

3. Caoutchouc selon la revendication 2, **caractérisé en ce que** la butée est formée par un bourrelet longitudinal respectif (11 ,13) orienté vers la partie inférieure (3), qui constitue le renfoncement concave respectif en tant qu'espace de déformation (10).

4. Caoutchouc selon la revendication 1, **caractérisé en ce que** la languette d'amortissement (9, 14) forme avec la partie supérieure (1) un angle de 15 à 25°.

5. Caoutchouc selon la revendication 3, **caractérisé en ce que** le bourrelet longitudinal (13) est formé d'un matériau avec une dureté Shore considérablement plus faible que celle du matériau du caoutchouc, en particulier d'un matériau avec une dureté Shore A inférieure de moitié à celle du matériau du caoutchouc.

6. Caoutchouc selon la revendication 3, **caractérisé en ce que** le matériau du bourrelet longitudinal est de l'EPDM, qui est co-extrudé lors de l'extrusion du caoutchouc.
